# FASCICULE DE BREVET EUROPEEN

(11) **EP 3 161 289 B1**
(45) Date de publication et mention de la délivrance du brevet: **03.07.2019**
(21) Numéro de dépôt: 15753715.0
(22) Date de dépôt: 26.06.2015
(51) Int. Cl.: F01N 5/04

(54) **SYSTÈME MOTEUR AVEC CIRCUIT DE RECIRCULATION DES GAZ BRÛLÉS**
MOTORSYSTEM MIT ABGASRÜCKFÜHRKREIS
ENGINE SYSTEM WITH EXHAUST GAS RECIRCULATION CIRCUIT

(30) Priorité: 26.06.2014 FR 1455947
(43) Date de publication de la demande: 03.05.2017
(73) Titulaire: Valeo Systèmes de Contrôle Moteur, 95800 Cergy Saint Christophe (FR)
(72) Inventeur: ANGELOT, Pierre-Julian, 78500 Sartrouville (FR); DECOSTER, Sylvain, 78860 Saint-Nom-la-Bretèche (FR); ISMAIL, Youssef, 95800 Cergy Saint Christophe (FR)
(74) Mandataire: Garcia, Christine
(86) Numéro de dépôt international: PCT/FR2015/051736
(87) Numéro de publication internationale: WO 2015/197993

(56) Documents cités:
- EP-A1- 1 081 368
- EP-A1- 2 196 659
- EP-A1- 2 674 603
- WO-A1-2008/062254
- WO-A1-2008/075127
- WO-A1-2008/075130
- WO-A1-2013/151760
- DE-A1- 19 951 096
- DE-A1-102011 108 204
- US-A1- 2007 220 885

## Description

La présente invention concerne les machines thermiques et plus particulièrement les moteurs à combustion interne à circuit de recirculation des gaz brûlés et turbocompresseur.

De nombreux moteurs diesel équipant les véhicules automobiles sont équipés de turbocompresseurs pour augmenter la pression des gaz admis. Ces turbocompresseurs comportent un compresseur d'air entraîné par une turbine animée par la pression des gaz d'échappement.

L'invention s'intéresse plus particulièrement aux systèmes moteurs à recirculation des gaz d'échappement à haute pression, dans lesquels une fraction des gaz d'échappement prélevée en amont de la turbine du turbocompresseur est mélangée aux gaz admis, après traversée d'une vanne EGR créant une chute de pression. Une telle recirculation permet notamment de réduire la teneur en oxydes d'azote (NOx) des gaz d'échappement des moteurs. La chute de pression précitée entraîne une déperdition d'énergie qui n'est pas récupérée dans les moteurs actuels.

Le document US2007/0220885A1 décrit un système moteur à circuit de recirculation des gaz brûlés, dans lequel le circuit de recirculation comporte une turbine de récupération d'énergie recevant les gaz d'échappement à haute pression en amont du turbocompresseur, la turbine étant accouplée à un générateur électrique.

L'invention vise à améliorer encore la performance des moteurs à turbocompresseur et recirculation des gaz brûlés et elle y parvient grâce au fait que le circuit de recirculation comporte une turbine de récupération d'énergie recevant les gaz d'échappement à haute pression en amont du turbocompresseur.

Grâce à l'invention, une partie de l'énergie perdue dans les moteurs actuels peut être récupérée afin de réduire la consommation de carburant.

Le circuit de recirculation comporte de préférence un refroidisseur en aval de la turbine.

Le système moteur comporte une vanne en aval de la turbine de récupération d'énergie, cette vanne étant de préférence de type marche/arrêt.

Selon l'invention, la turbine de récupération est accouplée à un générateur électrique.

L'énergie délivrée par ce générateur est utilisée au moins en partie pour alimenter un moteur électrique d'assistance au turbocompresseur.

De plus, l'énergie délivrée par le générateur peut encore être utilisée au moins en partie pour alimenter un moteur électrique d'assistance au vilebrequin du moteur thermique.

Le moteur thermique est de préférence un moteur diesel.

L'invention a encore pour objet un véhicule, notamment automobile, équipé d'un système moteur selon l'invention.

L'invention pourra être mieux comprise à la lecture de la description détaillée qui va suivre, d'exemples de mise en oeuvre non limitatifs de celle-ci, et à l'examen du dessin annexé, sur lequel :
- la figure 1 représente une architecture de moteur selon l'état de la technique,
- la figure 2 illustre l'introduction d'une turbine de récupération d'énergie dans le circuit de recirculation haute pression, et
- les figures 3 à 7 sont différents exemples de systèmes de moteurs permettant d'exploiter l'énergie récupérée par la turbine.

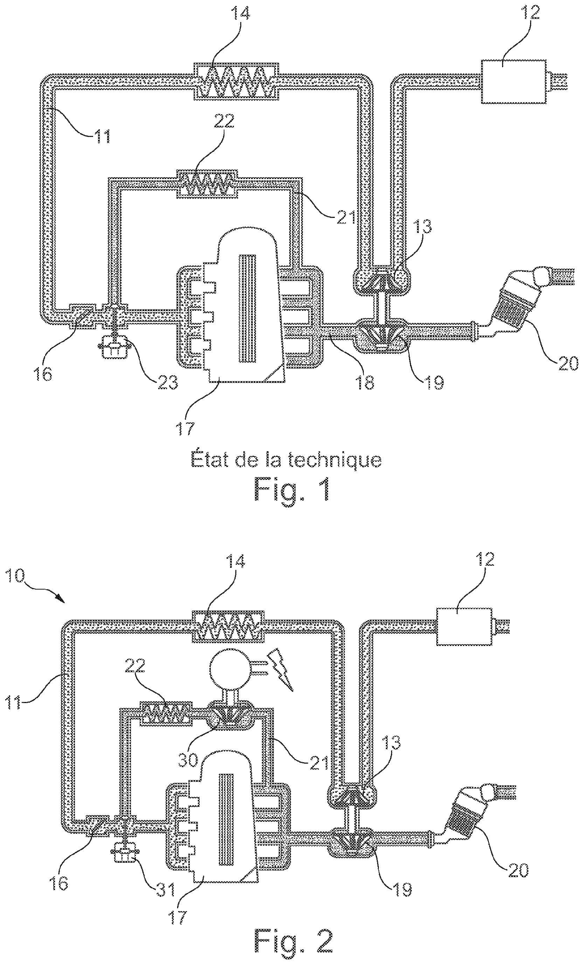

L'architecture connue représentée à la figure 1, encore appelée système moteur, comporte de façon connue en soi un moteur thermique à combustion interne 17 relié à un circuit 11 d'admission d'air dans le moteur, comportant un filtre à air 12 en entrée, un compresseur 13 de turbocompresseur pour comprimer l'air destiné au moteur et un refroidisseur 14 en aval du compresseur 13, pour refroidir l'air de suralimentation. Un dispositif de réglage de débit 16, tel que par exemple une vanne papillon, permet de contrôler le débit d'air admis dans le moteur à combustion interne 17. Ce dernier est relié à un circuit d'échappement 18 qui comporte une turbine 19 de turbocompresseur, entraînée par les gaz d'échappement, accouplée au compresseur 13 de suralimentation pour l'entraîner en rotation.

Le circuit d'échappement 18 comporte également, en aval de la turbine 19, un dispositif 20 de traitement des gaz brûlés.

Un circuit 21 de recirculation, muni d'un refroidisseur 22, capte une partie des gaz brûlés, en amont de la turbine 19, pour les réinjecter avec un débit contrôlé dans le moteur 17, par l'intermédiaire d'une vanne 23 dite vanne EGR qui crée une perte de charge suffisante.

On a représenté sur la figure 2 une architecture 10. Elle reprend des éléments de l'architecture connue représentée à la figure 1, qui ne seront pas décrits à nouveau en détail, et l'on a utilisé les mêmes références numériques pour désigner des éléments identiques ou analogues par leur fonction.

Conformément à l'invention, une turbine 30 de récupération d'énergie est placée dans le circuit 21 de recirculation des gaz brûlés, cette turbine réalisant sensiblement le même taux de détente que la vanne 23 de l'architecture connue, créant ainsi une chute de pression permettant d'amener les gaz à réinjecter à une pression compatible avec cette réinjection. Ainsi, la vanne 23 de l'état de la technique peut être remplacée par une vanne 31 introduisant une perte de charge plus faible, et qui est par exemple de fonctionnement en tout ou rien.

La rotation de la turbine 30 est mise à profit pour assister le fonctionnement du véhicule, par exemple en soulageant l'alternateur dans la production d'électricité (conformément à l'invention) et/ou en apportant une assistance mécanique (non-revendiquée) au moteur ou à des éléments de l'architecture moteur tels que le turbocompresseur par exemple.

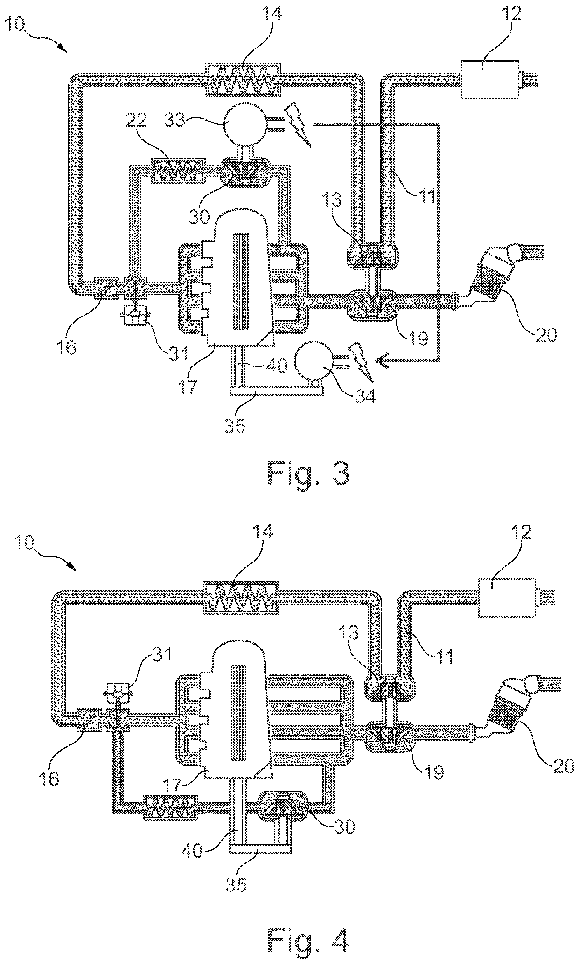

Dans l'exemple non-revendiqué de la figure 3, la turbine 30 est ainsi accouplée à un générateur électrique 33. Un moteur électrique 34 est accouplé au vilebrequin 40 du moteur 17, pour lui apporter une assistance mécanique. Ce moteur 34 est alimenté au moins en partie par l'électricité produite par le générateur 33.

Dans l'exemple non-revendiqué de la figure 4, la turbine 30 est accouplée mécaniquement au vilebrequin 40 pour l'assister dans sa rotation. Cet accouplement peut s'effectuer par une transmission 35 qui peut être de tout type, par exemple à courroie(s) et/ou engrenages.

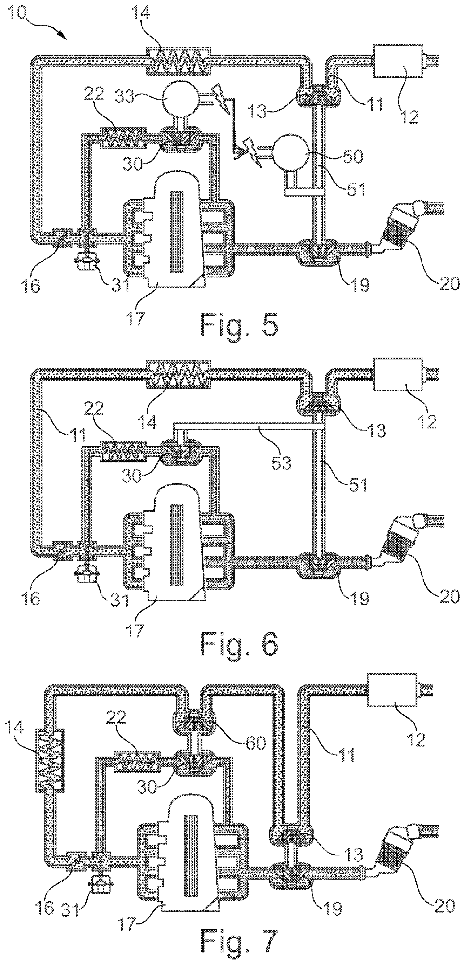

Dans l'exemple de la figure 5, selon l'invention, la turbine 30 entraîne un générateur électrique 33 comme dans l'exemple de la figure 3. Un moteur 50 est alimenté au moins en partie grâce à l'énergie produite par ce générateur 33. Le moteur 50 produit une assistance mécanique à un arbre 51 du turbocompresseur, contribuant ainsi à l'entraînement du compresseur 13 du turbocompresseur, côté alimentation en air.

Dans l'exemple non-revendiqué de la figure 6, la turbine 30 de récupération d'énergie est accouplée mécaniquement à l'aide d'une transmission 53 à l'arbre 51 du turbocompresseur, procurant ainsi une assistance mécanique à l'entraînement du compresseur 13.

Dans l'exemple non-revendiqué de la figure 7, la turbine 30 est accouplée à un compresseur 60 disposé en aval du compresseur 13 du turbocompresseur dans le circuit 11 d'alimentation en air, et le compresseur 60 contribue à augmenter la pression de l'air de suralimentation du moteur, ce qui peut permettre de soulager le compresseur 13. Ce deuxième compresseur 60 est par exemple placé en amont du refroidisseur 14.

Un avantage de la récupération de puissance dans le circuit de recirculation des gaz brûlés est l'absence d'impact en contrepression sur le moteur, et cette récupération d'énergie peut ainsi se faire sans augmentation de consommation de carburant ni de polluants.

Dans une application à un véhicule automobile, une simulation fait apparaître que la zone de récupération maximale d'énergie se situe sur des points de fonctionnement moteur où le véhicule est en fonctionnement stabilisé à une vitesse relativement grande, supérieure à 80 km/h, ce qui permet de récupérer de façon permanente l'énergie là où les systèmes hybrides sont inopérants. De plus, l'extraction de l'enthalpie des gaz de recirculation permet de sous-dimensionner les composants du circuit de recirculation en aval, étant soumis à une température plus faible. Le cas échéant, selon la calibration du moteur, la vanne 31 peut être supprimée.

Des simulations sur un véhicule de vitesse stabilisée à 110 km/h, avec un régime moteur de 2500 tours par minute et une pression de gaz brûlés de 9 bars, montrent qu'il est possible d'extraire environ 7 kW isentropique, et cette puissance peut, pour ce point de fonctionnement moteur, permettre les gains d'énergie suivants :
- 2,1% de gain de consommation lorsque la turbine 33 est utilisée pour entraîner un générateur électrique, par rapport à une production d'énergie électrique qui serait effectuée grâce à l'alternateur,
- 1,5% en cas d'assistance électrique du moteur comme illustré à la figure 3,
- 2,1% en cas d'assistance mécanique du moteur comme illustré à la figure 4,
- 2,6% en cas d'assistance électrique du turbocompresseur, comme illustré à la figure 5, et
- 3,1% en cas d'assistance mécanique du turbocompresseur, comme illustré à la figure 6.

Bien entendu, l'invention n'est pas limitée aux exemples illustrés.

On peut par exemple modifier encore les architectures illustrées, par exemple supprimer la vanne 31 de ces exemples (suppression non-revendiquée).

L'invention s'applique à un moteur de véhicule terrestre, naval ou aérien, ainsi qu'aux moteurs de groupes électrogènes et à toutes autres applications utilisant un moteur thermique à turbocompresseur et recirculation haute pression des gaz brûlés.

L'expression "comportant un" doit se comprendre comme étant synonyme de "comprenant au moins un".

## Revendications

1. Système moteur (10) à circuit (21) de recirculation des gaz brûlés provenant d'un moteur thermique (17) équipé d'un turbocompresseur (13,19), dans lequel le circuit de recirculation (21) comporte une turbine (30) de récupération d'énergie recevant les gaz d'échappement à haute pression en amont du turbocompresseur et une vanne (31) en aval de la turbine (30), la turbine (30) étant accouplée à un générateur électrique (33) et l'énergie délivrée par le générateur (33) étant utilisée au moins en partie pour alimenter un moteur électrique (50) d'assistance au turbocompresseur (13, 51, 19).

2. Système moteur selon la revendication 1, le circuit de recirculation (21) comportant un refroidisseur (14) en aval de la turbine (30).

3. Système moteur selon la revendication 1, la vanne (31) étant de type marche/arrêt.

4. Système moteur selon l'une des revendications 1 à 3, l'énergie délivrée par le générateur (33) étant utilisée au moins en partie pour alimenter un moteur électrique (34) d'assistance au vilebrequin (40) du moteur thermique.

5. Système moteur selon l'une quelconque des revendications 1 à 4, le moteur thermique (17) étant un moteur diesel.

6. Véhicule, notamment automobile, équipé d'un système moteur (10) tel que défini à l'une quelconque des revendications 1 à 5.

## Patentansprüche

1. Motorsystem (10) mit einem Kreis (21) zur Rückführung von Abgasen, die von einem Verbrennungsmotor (17) stammen, der mit einem Turbolader (13, 19) ausgestattet ist, wobei der Rückführkreis (21) eine Turbine (30) zur Energierückgewinnung, die die Hochdruckabgase aufnimmt, vorgelagert vor dem Turbolader und ein Ventil (31) nachgelagert nach der Turbine (30) aufweist, wobei die Turbine (30) mit einem elektrischen Generator (33) gekoppelt ist und wobei die Energie, die von dem Generator (33) bereitgestellt wird, mindestens teilweise verwendet wird, um einen Elektromotor (50) zur Unterstützung des Turboladers (13, 51, 19) zu speisen.

2. Motorsystem nach Anspruch 1, wobei der Rückführkreis (21) einen Kühler (14) vorgelagert vor der Turbine (30) aufweist.

3. Motorsystem nach Anspruch 1, wobei das Ventil (31) vom Typ des Ein/Aus-Ventils ist.

4. Motorsystem nach einem der Ansprüche 1 bis 3, wobei die Energie, die von dem Generator (33) bereitgestellt wird, mindestens teilweise verwendet wird, um einen Elektromotor (34) zur Unterstützung der Kurbelwelle (40) des Verbrennungsmotors zu speisen.

5. Motorsystem nach einem der Ansprüche 1 bis 4, wobei der Verbrennungsmotor (17) ein Dieselmotor ist.

6. Fahrzeug, insbesondere Kraftfahrzeug, das mit einem Motorsystem (10), wie in einem der Ansprüche 1 bis 5 definiert, ausgestattet ist.

## Claims

1. Engine system (10) with a recirculation circuit (21) for recirculating the burnt gases from a combustion engine (17) equipped with a turbocharger (13, 19), in which the recirculation circuit (21) comprises an energy-recuperation turbine (30) receiving the high-pressure exhaust gases upstream of the turbocharger and a valve (31) downstream of the turbine (30), the turbine (30) being coupled to an electric generator (33) and the energy delivered by the generator (33) being used at least in part to supply an electric motor (50) for assisting the turbocharger (13, 51, 19).

2. Engine system according to Claim 1, the recirculation circuit (21) comprising a cooler (14) downstream of the turbine (30).

3. Engine system according to Claim 1, the valve (31) being of the on/off type.

4. Engine system according to one of Claims 1 to 3, the energy delivered by the generator (33) being used at least in part to supply an electric motor (34) for assisting the crankshaft (40) of the combustion engine.

5. Engine system according to any one of Claims 1 to 4, the combustion engine (17) being a diesel engine.

6. Vehicle, in particular a motor vehicle, equipped with an engine system (10) as defined in any one of Claims 1 to 5.
